(19) Europäisches Patentamt
European Patent Office
Office européen des brevets

(11) Veröffentlichungsnummer: **0 025 554**
**B1**

(12) # EUROPÄISCHE PATENTSCHRIFT

(45) Veröffentlichungstag der Patentschrift: **04.05.83**

(51) Int. Cl.³: **C 09 D 5/40,** C 09 D 3/58, C 09 D 3/72, C 08 G 59/00, C 08 G 18/00, C 25 D 13/06

(21) Anmeldenummer: **80105245.7**

(22) Anmeldetag: **03.09.80**

(54) **Präkondensiertes, hitzehärtbares, wässriges Lacküberzugsmittel und dessen Verwendung zur kathodischen Abscheidung auf elektrisch leitenden Oberflächen.**

(30) Priorität: **08.09.79 DE 2936356**

(43) Veröffentlichungstag der Anmeldung: **25.03.81 Patentblatt 81/12**

(45) Bekanntmachung des Hinweises auf die Patenterteilung: **04.05.83 Patentblatt 83/18**

(84) Benannte Vertragsstaaten: **BE DE FR GB IT NL SE**

(56) Entgegenhaltungen: **FR-A-2 381 115**

(73) Patentinhaber: **Herberts Gesellschaft mit beschränkter Haftung, Christbusch 25, D-5600 Wuppertal 2 (DE)**

(72) Erfinder: **Patzchke, Hans-Peter, Dr., Am Heckendorn 71, D-5600 Wuppertal 2 (DE)**
Erfinder: **Göbel, Armin, Osterroder Strasse 27, D-5600 Wuppertal 2 (DE)**

(74) Vertreter: **Türk, Dietmar, Dr. rer. nat. et al, Redies, Redies, Türk & Gille Patentanwälte Brucknerstrasse 20, D-4000 Düsseldorf 13 (DE)**

**EP 0 025 554 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Präkondensiertes, hitzehärtbares wäßriges Lacküberzugsmittel und dessen Verwendung zur kathodischen Abscheidung auf elektrisch leitenden Oberflächen

Gegenstand der Erfindung ist ein präkondensiertes, hitzehärtbares wäßriges Lack-Überzugsmittel und dessen Verwendung zur kathodischen Abscheidung auf elektrisch leitenden Oberflächen.

In der europäischen Patentanmeldung 79 100 735.4 (Publikations Nr. 4 090) werden kathodisch abscheidbare Elektrotauchlack-Bindemittel beschrieben, die beim Einbrennen unter Abspalten von Alkoholen Amide bilden. Das in dieser Patentanmeldung beschriebene Überzugsmittel enthält als Bindemittel ein oder mehrere aminogruppenhaltige Harze (Komponente A), die primäre und/oder sekundäre und gegebenenfalls auch tertiäre Aminogruppen enthalten, sowie umamidierungsfähige Vernetzungsmittel (Komponente B). Es hat sich gezeigt, daß bei längerem Stehen des Elektrotauchlack-Bades, das diese Bindemittel enthält, unter gewissen Umständen Fällungserscheinungen bzw. Phasentrennungen auftreten können. Dieser nachteilige Effekt kann dadurch verringert oder auch oft verhindert werden, wenn das Vernetzungsmittel (Komponente B) ebenfalls Aminogruppen im Molekül enthält, wie in der genannten Patentanmeldung bereits beschrieben wurde.

Der vorliegenden Erfindung liegt die Aufgabenstellung zugrunde, in einfacher Weise die Gefahr derartiger Nachteile herabzusetzen bzw. auszuschließen. Ihr liegt außerdem die Aufgabenstellung zugrunde, ein Lacküberzugsmittel zu finden, das nach üblichen Lackauftragsverfahren aufgebracht werden kann, Lacküberzüge mit gutem Korrosionsschutz ergibt und möglichst wenig Spaltprodukte und organische Lösungsmittel beim Einbrennen an die Umgebung abgibt.

Es wurde überraschenderweise gefunden, daß diese Aufgabenstellung in sehr einfacher Weise dadurch gelöst werden kann, wenn die Lacküberzugsmittel als Bindemittel Präkondensate der genannten Komponenten A und B enthalten.

Gegenstand der vorliegenden Erfindung ist demgemäß ein präkondensiertes, hitzehärtbares wäßriges Lacküberzugsmittel enthaltend durch Protonisieren mit Säuren wasserverdünnbares Bindemittel, Pigmente, Füllstoffe, Korrosionsschutzinhibitoren, Lackhilfsmittel, gegebenenfalls Katalysatoren und in einer Menge von bis zu 20 Gew.-%, bezogen auf das Gesamtgewicht des Überzugsmittels, organische Lösungsmittel, das dadurch gekennzeichnet ist, daß es als Bindemittel enthält ein Präkondensationsprodukt mit einem mittleren Molekulargewicht ($\overline{Mn}$) von 800 bis 15 000, durch Erhitzen von

A) 55 bis 95 Gew.-%, bezogen auf die Gesamtmenge des Bindemittels, primäre und/oder sekundäre und gegebenenfalls auch tertiäre Aminogruppen enthaltendes organisches Kunstharz-Bindemittel, das eine Aminzahl von 30 bis 150 aufweist, und

B) 5 bis 45 Gew.-% Vernetzungsmittel, das endständige Carboxylgruppen enthält, von denen ein solcher Anteil mit Monoalkoholen verestert ist, daß das Präkondensat eine Esterzahl von mindestens 30, bevorzugt von mindestens 50, aufweist, wobei die Estergruppen in neutralem wäßrigem Medium weitgehend stabil sind, jedoch in basischem Medium bei Temperaturen über 140°C gegenüber primären und/oder sekundären Aminogruppen des Kunstharz-Bindemittels A reaktionsfähig sind,

auf Temperaturen von 50 bis 200°C für einen solchen Zeitraum, daß es nach Protonisieren mit Säure und Verdünnen mit Wasser zur Herstellung eines Lackes keine Fällungserscheinungen zeigt.

Unter endständigen Carboxylgruppen werden solche verstanden, die am Kettenende oder am Ende von Seitenketten verzweigter Moleküle vorliegen.

Gegenstand der Erfindung ist weiterhin bevorzugt die Verwendung dieses Überzugsmittels zur kathodischen Abscheidung aus einem Lackbad auf elektrisch leitende Oberflächen.

Das Kunstharz-Bindemittel (Komponente A) ist zweckmäßig ein Polyamid oder ein Reaktionsprodukt von epoxidgruppenhaltigen oder isocyanatgruppenhaltigen Verbindungen mit einem Molekulargewicht von mehr als 300 mit hydroxy- oder aminogruppenhaltigen Aldiminen, Ketiminen oder aliphatischen Polyaminen, wobei im wesentlichen alle Epoxid- und Isocyanatgruppen mit je einem Molekül Aldimin, Ketimin oder Diamin umgesetzt sind.

Das Vernetzungsmittel (Komponente B) ist zweckmäßig ein Polyester oder ein Reaktionsprodukt von epoxidgruppenhaltigen oder isocyanatgruppenhaltigen Verbindungen mit einem Molekulargewicht über 300 mit Hydroxy- und/oder Aminoalkylestern oder sauren Polycarbonsäureestern. Die Komponente B enthält zweckmäßig 2 bis 6 endständige zumindest teilweise veresterte Carboxylgruppen.

Die reaktive primäre und/oder sekundäre Aminogruppen enthaltende Komponente A wird hergestellt mit einem mittleren Molekulargewicht (Mn) von mindestens etwa 500, vorzugsweise mindestens etwa 700, besonders bevorzugt mindestens etwa 800. Es liegt höchstens bei etwa 10 000, besonders höchstens etwa 8 000, bevorzugt höchstens etwa 5 000. Das geeignete mittlere Molekulargewicht kann auch durch Mischen zweier derartiger Harze, wovon das eine ein höheres und das andere ein niedrigeres Molekulargewicht enthält, entstehen. Für das Erzielen einer geeigneten Wasserlöslichkeit ist es notwendig, daß das Bindemittel eine Aminzahl von mindestens 30, bevorzugt mindestens etwa 60, besonders bevorzugt mindestens etwa 80 aufweist. Sie liegt höchstens bei 150,

besonders etwa 130, bevorzugt etwa 120. Der Anteil an primären und/oder sekundären Aminogruppen sollte mindestens bei 1/3 der Gesamtzahl der Aminogruppen liegen, d. h. die reaktive Aminzahl sollte über 30, vorzugsweise über 50 liegen. Die Aminzahl kann auch durch Mischen zweier geeigneter Harze, wovon das eine eine hohe, das andere eine niedrigere Aminzahl enthält, entstehen. Es wird angestrebt, den Anteil an im Molekül vorhandenen tertiären Aminogruppen möglichst klein und den Anteil an sekundären bzw. besonders vorteilhaft primären Aminogruppen möglichst hoch zu halten. Die für die Herstellung der Komponente A verwendeten Amine haben zweckmäßig einen $pK_b$-Wert von etwa 2,5 bis 9,0, besonders 2,8 bis 7,0, und besonders zweckmäßig von 3,0 bis 5,5.

Das Einführen von primären und/oder sekundären Aminogruppen in den Harzgrundkörper zur Herstellung der Komponente A erfolgt zweckmäßig durch Umsetzung von mehr als einer, bevorzugt mindestens zwei Epoxidgruppen oder Isocyanatgruppen pro Molekül enthaltenden Harzen mit einem amino- und/oder hydroxylgruppenhaltigen Ketimin bzw. Aldimin und/oder besonders bevorzugt Polyamin. Als besonders geeignet erweisen sich für diese Umsetzung 1,2-epoxidgruppenhaltige Harze, die hergestellt werden durch

a) Einführen von Glycidylgruppen in alkalischem Medium über z. B. Epichlorhydrin
   aa) in OH-funktionelle Harze z. B. Epoxi-Novolake (=Polyglycidyläther)
   ab) in COOH-funktionelle Harze (=Polyglycidylester), oder
   ac) in $NH_2$-funktionelle Harze (=Polyglycidylamine)
b) Einpolymerisieren von Glycidyl(meth)acrylat in eine geeignete Monomerenmischung von z. B. Styrol und/oder (Meth)acrylsäureestern verschiedener Kettenlänge und/oder Hydroxialkyl(meth)-acrylaten.

Besonders bevorzugt gemäß a) ist, daß die 1,2-epoxidgruppenhaltigen Harze Polyglycidyläther der allgemeinen Formel

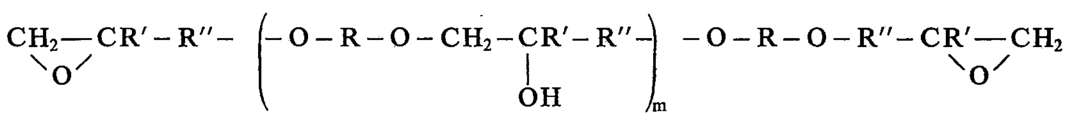

worin bedeuten

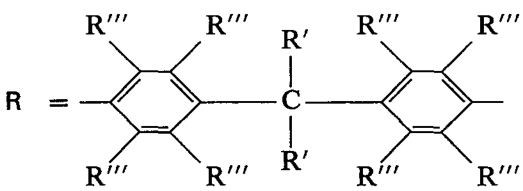

R′ = Wasserstoff oder $-C_nH_{2n+1}$
R″ = $-(CR'_2)_n-$
R‴ = R′ oder Halogen, vorzugsweise Wasserstoff
m = 0 bis 8
n = 1 bis 3

mit einem mittleren Molekulargewicht ($\overline{Mn}$) von etwa 300 bis 2 000 und einem Epoxiäquivalentgewicht von etwa 170 bis 1 500 sind. Solche Harze sind Umsetzungsprodukte von Epichlorhydrin mit Dioxi-diphenylmethan (Bisphenol F) oder Dioxi-diphenylpropan (Bisphenol A) und können auch in hydrierter Form eingesetzt werden.

Um die Funktionalität zu verringern oder die Kette zu verlängern und damit das Molekulargewicht zu erhöhen, können die bevorzugten Polyglycidyläther mit Verbindungen umgesetzt werden, die reaktiven Wasserstoff enthalten. Solche Verbindungen haben z. B. Carboxylgruppen, Hydroxylgruppen oder primäre und sekundäre Aminogruppen. Bevorzugte Kettenabbruchmittel sind Dimethylolpropionsäure, Isopalmitinsäure, Versaticsäure, Diäthylamin, Di-(2-äthylhexyl)amin, Diäthanolamin und/oder lineare, verzweigte, gesättigte oder ungesättigte Monoalkohole verschiedener Kettenlänge. Bevorzugte Kettenverlängerungsmittel sind organische Polyalkohole wie Hexandiol-1,6 oder Dioxiddiphenylpropan, insbesondere polymere Polyole wie Polyoxialkylenglykole oder Polyätherpolyole und/oder Diamine mit sekundären Aminogruppen wie das Reaktionsprodukt von Hexandiamin-1,6 mit zwei Molen Glycidyläther oder Glycidylester α-verzweigter Fettsäuren.

Durch den Einbau von tertiären Aminogruppen in die Molekülkette wird die Dispergierbarkeit verbessert, weil die durch Salzbildung entstehenden quaternären Ammoniumsalze über das ganze Molekül verteilt sind und nicht nur am Molekülende angeordnet sind. Epoxidierte Polyglycidyläther können auch andere Grundkomponenten enthalten, wie Triglycidylisocyanurat, heterocyclischeDiglycidylverbindungen (DE-A-1 816 095), substituierte Hydantoine (US-A-3 391 097), Dicyclopentadien-diepoxid oder 1-Epoxiäthyl-3.4-epoxicyclohexan.

Durch Copolymerisation von Glycidyl-(meth)acrylat mit anderen ungesättigten Monomeren werden epoxidgruppenhaltige Harze mit einem mittleren Molekulargewicht ($\overline{Mn}$) von mindestens etwa 500, besonders mindestens etwa 800 und höchstens etwa 10 000, besonders höchstens etwa 6 000 hergestellt. Das Epoxiäquivalentgewicht beträgt mindestens etwa 300, besonders mindestens etwa 500 und höchstens etwa 5 000, besonders höchstens etwa 2 000. Ungesättigte Monomere sind z. B. Styrol, Vinyltoluol, α-Methylstyrol und/oder (Meth)-acrylsäureester verschiedener Kettenlänge, wobei die Methacrylsäureester bevorzugt lineare oder verzweigte aliphatische $C_1$ bis $C_4$-Alkohole und die Acrylsäureester bevorzugt lineare oder verzweigte aliphatische, cycloaliphatische oder aromatische $C_1$ bis $C_8$-Alkohole enthalten. Als zusätzliche Komponente können gegebenenfalls hydroxylgruppenhaltige Monomere wie Hydroxialkyl(meth)acrylsäureester z. B. 2-Hydroxipropylmethacrylat, 1,4-Butandiolmonoacrylat oder Hydroxiäthylacrylat oder verätherte Methylolderivate des (Meth)arylamids verwendet werden. Die Mischpolymerisation erfolgt in organischen Lösungsmitteln wie Alkoholen oder Glykoläthern bei etwa 60 bis 145°C unter Zusatz von radikalischen Initiatoren wie Peroxiden, Hydroperoxiden, Perestern oder thermisch spaltbaren Azoverbindungen. Die Reaktionsbedingungen (Reaktionstemperatur, Auswahl des Lösungsmittels) müssen so geführt werden, daß keine die Ketiminbindung bzw. Aldiminbindung zersetzende Substanzen wie Wasser in dem Reaktionsprodukt vorhanden bleiben. Als isocyanatgruppenhaltige Polymere eignen sich Grundharze, die aus aromatischen, aliphatischen und/oder cycloaliphatischen Grundgerüsten mit mindestens zwei Isocyanatgruppen pro Molekül bestehen. Typische Beispiele sind die Isomeren oder Isomerengemische des Toluylendiisocyanats, des 4,4'-Diphenylmethan-diisocyanats sowie ihre Hydrierungsprodukte wie Dicyclohexylmethan-diisocyanat. Außerdem finden Verwendung Hexan-1,6-diisocyanat, 1,6-Diisocyanato-2,2,4-trimethylhexan und 1-Isocyanato-methyl-3-isocyanato-1,5,5-trimethylcyclohexan. Besonders bevorzugt werden dabei höherfunktionelle Polyisocyanate, die durch Trimerisation, Umsetzung mit Wasser, Reaktion mit Polyalkoholen wie Trimethylolpropan, Triäthylisocyanurat oder aminogruppenhaltigen oder ketimingruppenhaltigen Polyolen entstehen. Derartige Produkte werden im Handel angeboten, z. B. Triphenylmethan-4,4',4''-triisocyanat (Desmodur R), das Biuret aus Hexamethylendiisocyanat und Wasser (Desmodur N) oder das Addukt aus Toluylendiisocyanat und Trimethylolpropan (Desmodur L). Kettenabbruch oder Kettenverlängerungen können auch hier — je nach Funktionalität — durch Umsetzung mit Verbindungen erfolgen, die reaktiven Wasserstoff enthalten, wobei Amid-, Urethan- oder Harnstoffbindungen entstehen. Beispiele hierfür sind Dodecylalkohol, Dimethyl-aminoäthanol, Di-(2-äthylhexyl)amin, Hexandiol-1,6, N-Methyldiäthanolamin oder das Reaktionsprodukt von Hexandiamin-1,6 mit 2 Molen Glycidyläther oder Glycidylester α-verzweigter Fettsäuren. Geeignete isocyanathaltige Präpolymere werden auch durch Reaktion von Polyglykoläthern, Polyesterpolyolen, Polyätherpolyolen, Polycaprolactonpolyolen, Polycaprolactampolyolen oder Polyaminoamiden mit überschüssigen Polyisocyanaten bei Temperaturen von etwa 30 bis 100°C hergestellt, eventuell unter Zusatz von Katalysatoren wie Dibutylzinndilaurat oder tertiären Aminen. Die Einführung von primären Aminogruppen in isocyanathaltige und epoxidgruppenhaltige Harze geschieht durch stöchiometrische Addition von Ketiminen bzw. Aldiminen oder durch Reaktion mit überschüssigen Polyaminen. Als Ketimine bzw. Aldimine werden hydroxyl- oder aminogruppenhaltige lineare, verzweigte oder cyclische Alkylketimine oder Alkylaldimine verwendet, z. B. Produkte folgender Struktur

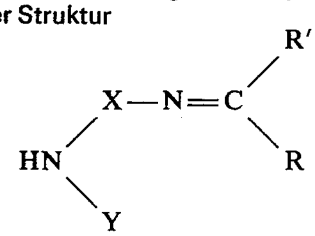

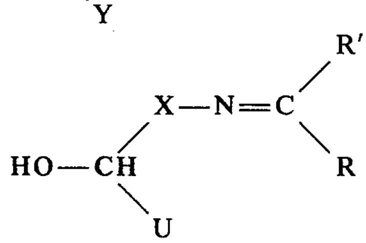

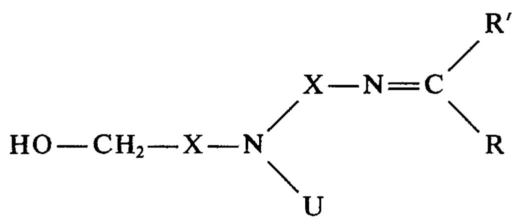

wobei bedeuten

$X = -(CR_2)_n-$

$R = -H, -R'$

$R' = -C_mH_{2m+1}, -C_6H_{11}$

$U = -R, -Y$

Y = 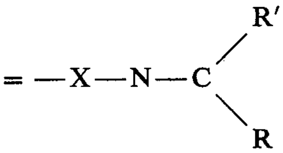 $-X-OH$ $-R'$ oder

$-CH_2-CH-CH_2-O-Z-R'$

OH

Z = >CO, –X
n = 1 bis 6
m = 1 bis 12

Die Ketimine bzw. Aldimine werden nach bekannten Methoden durch Wasserabspaltung aus den entsprechenden Polyaminen der allgemeinen Struktur $R-NH-R-NH_2$ oder den entsprechenden Aminoalkoholen der allgemeinen Struktur $HO-R-NH_2$ und den geeigneten aliphatischen Ketonen wie Diäthylketon, Methylisobutylketon, Äthyl-n-propylketon, oder auch Cyclopentanon, Cyclohexanon, Acetophenon usw. oder Aldehyden wie Isobutyraldehyd hergestellt. Die Verwendung von Ketiminen wird bevorzugt. Um die Ketiminbildung zu erleichtern, werden Ketone bevorzugt, die es gestatten, auf einfache Weise das Reaktionswasser auszukreisen, und deren Substituenten eine möglichst kleine sterische Hinderung bewirken. Als Amine werden bevorzugt verwendet Diäthylentriamin, N-Methyl-Äthylendiamin,N-Methylpropylendiamin, N-Aminoäthyl-Piperazin, als Aminoalkohole 2-Aminoäthanol.

Durch die Ketiminbildung bzw. Aldiminbildung wird die primäre Aminogruppe so geschützt (vgl. US-A-3 523 925), daß sie über eine weitere funktionelle Gruppe, z. B. eine sekundäre Aminogruppe oder eine Hydroxylgruppe ohne Schwierigkeiten mit dem Epoxidgrundharz zur Komponente A umgesetzt werden kann. Die Schutzgruppe wird beim Lösen in Wasser leicht wieder abgespalten. Dies erfolgt zweckmäßig erst nach der Präkondensation. Unter der Definition »primäre Aminogruppen« für die Komponente A werden also auch die durch Ketimin- oder Aldimingruppen geschützten Aminogruppen verstanden. Durch die Wahl der Molverhältnisse der eingesetzten Komponenten muß gewährleistet sein, daß kein unumgesetztes niedrigmolekulares Amin im Ansatz zurückbleibt, weil sonst durchbruchartige Oberflächenströmungen beim elektrophoretischen Beschichten auftreten. Die bevorzugte Reaktion der sekundären Aminogruppe des Polyaminoketimins mit der Epoxidgruppe beginnt schon bei Raumtemperatur und ist im allgemeinen exotherm. Um eine vollständige Umsetzung zu erreichen, ist es in der Regel notwendig, die Temperatur zeitweise auf 50 bis 120°C zu erhöhen.

Die Reaktion der hydroxylgruppenhaltigen Ketimine mit Epoxidgruppen erfolgt bei etwa 100 bis 150°C und kann durch Zusatz von basischen Katalysatoren wie tertiären Aminen, z. B. N,N-Dimethyl-benzylamin, oder Friedel-Crafts-Katalysatoren wie Borfluorid oder Zinn-II-chlorid erniedrigt werden. Die Reaktionsbedingungen (Temperatur, Auswahl des Lösungsmittels, wasserfreies Arbeiten) werden so ausgewählt, daß keine Aufspaltung der Ketimingruppe eintritt. Zur Herstellung von Produkten mit niedriger Viskosität ist es oft nützlich, die Ketimin-Lösung vorzulegen und das Grundharz langsam zuzugeben. Durch die Reaktion von Polyglycidyläthern auf Basis Bisphenol mit amino- und/oder hydroxylgruppenhaltigen Alkylketiminen entstehen am Epoxidharz sekundäre Hydroxylgruppen. Sollen primäre Hydroxylgruppen hergestellt werden, so muß entweder mit Aminoalkoholen umgesetzt oder die entsprechende Hydroxylgruppe durch hydrolytische Aufspaltung über die entsprechenden Ester hergestellt werden. Die dabei primär zum Verestern verwendeten niedrigmolekularen Monocarbonsäuren, z. B. Milchsäure, dienen nach der Hydrolyse gleichzeitig als Neutralisierungsmittel. Eine andere bekannte Ausführungsform zum Herstellen von Harzen mit primären und/oder sekundären Aminogruppen ist die Umsetzung mit niederen aliphatischen linearen oder verzweigten $C_2$ bis $C_6$-Alkylendiaminen oder Polyalkylendiaminen, die besonders dann angebracht sind, wenn die für die Addition, Veresterung oder Umesterung notwendige Reaktionstemperatur so hoch sein muß, daß sich die Ketimine zersetzen oder andere störende Nebenreaktionen den Einsatz von Ketiminen verhindern. Primäre Amine sind difunktionell und können zu einer Gelierung der Reaktionsmischung führen. Bei ihrem Einsatz müssen daher Maßnahmen gegen eine Gelierung getroffen werden. So kann z. B. mit einem Überschuß an Amin gearbeitet werden und das überschüssige Amin nach Beendigung der Umsetzung im Vakuum abdestilliert werden. Außerdem können die Reaktionsbedingungen so variiert werden, daß das epoxidgruppenhaltige Material zu dem überschüssigen Amin zugegeben wird. Das gleiche ist bei der Verwendung von Polyaminen, wie Äthylendiamin zu berücksichtigen.

So werden zum Beispiel epoxidgruppenhaltige Harze aus olefinische Doppelbindungen enthaltenden Polykohlenwasserstoffen mit einem mittleren Molekulargewicht (Mn) von 750 bis 6 000 und einem Epoxiäquivalentgewicht von 500 bis 2 000 mit überschüssigem Äthylendiamin oder Diäthylentriamin bei Temperaturen von etwa 120 bis 200°C umgesetzt und der Aminüberschuß im

Vakuum abdestilliert. Olefinische Doppelbindungen enthaltende Kohlenwasserstoffharze sind z. B. Polybutadienöle der verschiedenen sterischen Konfiguration, Copolymerisate des Butadiens mit anderen ungesättigten Monomeren wie Styrol oder flüssiges Polypentadien. Sie werden durch Umsetzung mit Persäuren wie Perameisensäure oder Peressigsäure epoxidiert.

Die reaktiveren Polyglycidyläther auf Basis Bisphenol A reagieren dagegen schon bei Raumtemperatur. Um Gelierungen zu vermeiden, wird erstens pro Epoxiäquivalent mit 1,1 bis 8 Mol Polyamin, bevorzugt 2 bis 6 Mol Polyamin-Überschuß gearbeitet und zweitens das Epoxidharz in das vorgelegte Polyamin zugegeben. Das Epoxidharz kann in fester, pulverisierte Form eingestreut oder als Lösung in einem organischen Lösungsmittel, wie z. B. Xylol oder Xylol-Butanol, langsam zugegeben werden. Das Lösungsmittel und überschüssige Amin muß dann unter Vakuum und Ausschluß von Sauerstoff sehr sorgfältig abdestilliert werden und kann beim nächsten Ansatz wieder verwendet werden.

Polyaminoamide oder aminogruppenhaltige Polyamide werden aus niederen aliphatischen linearen oder verzweigten Polyaminen und/oder Aminoalkoholen, gegebenenfalls im Gemisch mit Polyalkoholen, mit mehrbasischen Carbonsäuren und/oder deren Anhydriden hergestellt. Als niedere, aliphatische Polyamine und/oder Aminoalkohole, die bevorzugt in stöchiometrischem Überschuß verwendet werden, dienen z. B. niedere, aliphatische Polyamine wie Äthylendiamin oder Diäthylentriamin oder Aminoalkohole oder Gemische davon mit mehrbasischen Säuren wie dimerisierte Fettsäure, gegebenenfalls unter Zusatz von geeigneten niedermolekularen Polyolen, wie Neopentylglykol oder Polyglykoläthern, oder höheren polymeren Polyolen, wie Polyesterpolyole, Polyätherpolyole, Polycaprolactonpolyole. Die Abstimmung geeigneter Aminzahlen mit dem Molekulargewichtsbereich erfolgt durch Zusatz geeigneter Kettenabbruchsmittel wie gesättigten oder ungesättigten Monocarbonsäuren, Monoalkoholen oder Monoaminen. Die Kondensation erfolgt in üblicher Weise in der Schmelze oder als aceotrope Kondensation bei Temperaturen von etwa 150 bis 250°C. Ähnliche Produkte werden unter den Handelsnahmen Beckopox, Versamid oder Merginamid großtechnisch hergestellt.

Solche Polyaminoamide können auch durch Umesterung von estergruppenhaltigen Kondensationsharzen mit Polyaminen oder auch aminogruppenhaltigen Alkylketiminen unter Abspaltung von niedrigsiedenen Alkoholen wie Methanol oder Äthanol eventuell in Gegenwart von Umesterungskatalasatoren hergestellt werden.

Das Vernetzungsmittel (Komponente B) ist ein Harz, das zu Amidierungsreaktionen mit Harzen, die primäre und/oder sekundäre Aminogruppen enthalten, befähigt ist. Solche Vorgänge laufen bevorzugt ab mit endständigen, veresterten Carboxylgruppen, die im neutralen wäßrigen Medium weitgehend stabil sind, jedoch im basischen Medium des abgeschiedenen Films bei Temperaturen über etwa 140°C, besonders über 160°C mit dem primären und/oder sekundären Aminogruppen enthaltenden Kunstharzbindemittel (Komponente A) reagieren.

Das Vernetzungsmittel enthält etwa 2 bis 6 endständig veresterte Carboxylgruppen pro Molekül. Die Vernetzungsdichte muß mit den gewünschten Filmeigenschaften abgestimmt werden. Bei niedrigerer Anzahl an veresterten Carboxylgruppen wird die Beständigkeit gegen organische Lösungsmittel wie Methyläthylketon geringer. Sind weniger als zwei Gruppen im Molekül, so tritt überhaupt keine Vernetzung mehr auf. Wird die Anzahl der Vernetzungsstellen pro Molekül zu hoch, so verschlechtert sich der Verlauf und es besteht die Gefahr der Herstellung eines spröden Films. Die Carboxylgruppe kann verestert sein mit kurz- und/oder langkettigen linearen und/oder verzweigten $C_1-C_{18}$, bevorzugt $C_1-C_6$ Monoalkoholen. Die Flüchtigkeit des abgespaltenen Alkohols sollte so groß sein, daß er bei den anzuwendenden Einbrenntemperaturen in dünnen Schichten aus dem Film entfernt wird. Es sollen im wesentlichen alle endständigen Carboxylgruppen mit Alkoholen verestert werden, die einen Siedepunkt unter 280°C, bevorzugt unter 180°C, und besonders bevorzugt unter 140°C haben. Um ein Wandern der Komponente B zur Anode zu vermeiden, ist darauf zu achten, daß mehr als 80, bevorzugt 90, besonders bevorzugt 95 Äquivalentprozent, d. h. im wesentlichen alle der endständigen Carboxylgruppen verestert sind. Um einen guten Verlauf zu erzielen, ist es notwendig, einen Anteil an abspaltbaren Hochsiedern im Film zu haben. Andererseits wird die Reaktionsfähigkeit der Ester durch den Einsatz niedrigsiedender primärer, vorzugsweise niedriger aliphatischer, Alkohole wie Methanol oder Äthanol und durch die Erhöhung der elektrophilen Aktivität der Carboxylgruppe durch geeignete Substituenten gesteigert. Besonders gut hat sich der Einbau von Methyl- und/oder Äthylester der Milchsäure und der Monomethyl- und/oder Monoäthyl-bernsteinsäureester bewährt. Die Grenze für die Anzahl der Estergruppen ist gegeben durch den synthetisch möglichen Molekülaufbau. Sie liegt zweckmäßig bei höchstens etwa 370, besonders höchstens etwa 250, bevorzugt höchstens 180. Die untere Grenze liegt bevorzugt bei etwa 70. Die Esterzahl bezeichnet die Menge in mg KOH, die der Menge Alkohol äquivalent ist, welche in 1 g Festsubstanz enthalten ist und beim thermischen Vernetzen durch Umamidierung abgespalten werden kann. Um die Verträglichkeit zu fördern, kann die Komponente B eine Aminzahl von 0 bis 100, vorzugsweise 10 bis 60 enthalten. Bevorzugt beträgt das mittlere Molekulargewicht ($\overline{Mn}$) der Komponente B etwa 500 bis 3 000.

Solche Vernetzungsmittel lassen sich auf verschiedenen Wegen herstellen, aufgrund der schonenden Reaktionsbedingungen und damit verbunden der geringen Vergilbung der Produkte hat sich jedoch als besonders brauchbarer Syntheseweg die Addition von Hydroxy- und/oder

Aminoalkyl-carbonsäureestern bzw. von Dicarbonsäuremonoalkylestern an Moleküle mit Isocyanat- oder Epoxidgruppen erwiesen. Besonders bevorzugt wird die Addition von Hydroxy- und/oder Aminoalkyl-carbonsäureestern an aliphatische, cycloaliphatische und/oder aromatische Polyisocyanate mit mindestens zwei Isocyanatgruppen pro Molekül. Es können dabei die weiter oben beschriebenen Polyisocyanate eingesetzt werden; ein Sonderfall ist die Verwendung von estergruppenhaltigen Diisocyanaten wie z. B. 2,6-Diisocyanatomethylcapronat (Lysindiisocyanatmethylester). Es werden jedoch Polyisocyanate mit mehr als zwei Isocyanatgruppen bevorzugt, wie sie durch die weiter oben beschriebenen Reaktionen hergestellt werden können. Um eine verbesserte Badstabilität zu erzielen, ist oft die Anwesenheit von basischen Aminogruppen im Molekül erwünscht. Sie werden durch Verknüpfen von zwei oder mehreren Polyisocyanaten mit Aminoalkoholen eingeführt. Als Aminoalkohole werden bevorzugt aminogruppenhaltige Polyole wie Äthanolamin, N-Methyldiäthanolamin oder Triäthanolamin oder ketimingruppenhaltige Polyole, die durch Kondensation von 2-Amino-2-äthyl-1,3-propandiol, N-(2-Hydroxiäthyl)-äthylendiamin oder N,N-Bis-(2-hydroxiäthyl)-äthylendiamin mit Ketonen wie Methylisobutylketon hergestellt werden.

Das Polyisocyanat wird bei Temperaturen von etwa 30 bis 50°C in stöchiometrischen Mengenverhältnissen mit Hydroxicarbonsäureestern oder Aminocarbonsäureestern gemischt, um dem exothermen Effekt Rechnung zu tragen. Zur Vervollständigung der Reaktion kann danach auf Temperaturen bis zu etwa 100°C, bevorzugt bis auf 80°C gegangen werden. Um eine unkontrollierte Reaktion der Isocyanatgruppen zu vermeiden, wird unter Ausschluß von Feuchtigkeit und Luftsauerstoff gearbeitet und die Funktionalität des Polyisocyanats dadurch verringert, daß erst die Umsetzung mit den Hydroxialkyl- und/oder Aminoalkyl-carbonsäureestern und dann das Verknüpfen der restlichen Isocyanatgruppen über einen aminogruppenhaltigen Polyalkohol erfolgt. Als andere Arbeitsweise hat sich auch die langsame Zugabe des Polyisocyanats in die vorgelegte Lösung aus Hydroxialkyl- und/oder Aminoalkyl-carbonsäureester und aminogruppenhaltigem Polyalkohol in einem niedrigsiedenden, inerten Lösungsmittel wie Essigester, der später abdestilliert wird, bewährt. Zur Verringerung der Reaktionsfähigkeit und gleichzeitiger Elastifizierung können geringe Anteile des Amino-alkyl- und/oder Hydroxialkylcarbonsäureesters molmäßig gegen längerkettige Amine wie z. B. Di-(2-äthyl-hexyl)amin oder Alkohole, z. B. Äthylhexanol ausgetauscht werden. Als Hydroxicarbonsäureester finden z. B. Verwendung Dimethylolpropionsäuremethylester, Milchsäureäthylester, Hydroxiessigsäurebutylester, Oxybuttersäureester, Mandelsäureäthylester, oder Salicylsäuremethylester. Als Aminocarbonsäureester können z. B. Sarkosinsäureäthylester oder Anthranilsäuremethylester eingesetzt werden.

Als Polyepoxidharze, die besonders bevorzugt mit Aminoalkylcarbonsäureestern und/oder Dicarbonsäure-monoalkylestern umgesetzt werden, eignen sich die weiter oben beschriebenen epoxidgruppenhaltige Harze, wobei mindestens zwei, bevorzugt mehr als zwei Epoxidgruppen im Molekül vorhanden sein sollen. Die Monoester werden aus gesättigten oder ungesättigten Dicarbonsäureanhydriden, wie Maleinsäureanhydrid, Bernsteinsäureanhydrid oder Tetrahydrophthalsäureanhydrid und $C_1$ bis $C_6$ linearen oder verzweigten, gesättigten und ungesättigten Monoalkoholen, bevorzugt Methanol und/oder Äthanol hergestellt. Ein geringer Überschuß des verwendeten Alkohols erhöht die Stabilität des Monoesters. Sowohl bei der Herstellung als auch bei der Zugabe zum Epoxidharz sollte die Reaktionstemperatur nach Möglichkeit unter 120°C, bevorzugt unter 100°C gehalten werden, um Umesterungen zu vermeiden. Aminogruppen werden am besten durch anteilweisen Einbau von sekundären Monoaminen wie Diäthylamin, N-Methyl-äthanolamin oder Diäthanolamin eingeführt oder zwei oder mehr Epoxidharzmoleküle über primäre Amine wie n-Butylamin, Monoäthanolamin oder Glycinalkylester oder über Diamine mit sekundären Aminogruppen verknüpft.

Eine Variante dieses Verfahrens ist die Polykondensation von sauren Polycarbonsäurealkylestern mit überwiegend Monoepoxidverbindungen. Bei der Herstellung dieser Produkte wird bevorzugt in einem Zweistufenverfahren gearbeitet.

1. Umsetzung von Polycarbonsäureanhydriden mit Hydroxialkylcarbonsäureestern bei Temperaturen von etwa 120 bis 240°C, bevorzugt 160 bis 200°C, bis alle Anhydridgruppen reagiert haben. Zweckmäßig werden 1 bis 1,3 Val Hydroxialkylsäureester pro Val Anhydrid eingesetzt. Die Reaktion kann durch basische Katalysatoren wie tertiären Aminen katalysiert werden. Als Hydroxialkylcarbonsäureester werden besonders Milchsäureäthylester, Milchsäurepropylester, oder Dimethylolpropionsäuremethylester verwendet. Polycarbonsäureanhydride sind z. B. Trimellithsäureanhydrid, Pyromellithsäuredianhydrid oder entsprechende hydrierte Ringsysteme, sowie Cyclopentantetracarbonsäuredianhydrid, Pyrazintetracarbonsäureanhydrid, Butantetracarbonsäuredianhydrid, Bisanhydridsysteme, wie sie in der DE-A-2 811 913 verwendet werden, oder auch Anhydridgruppen enthaltende Copolymere wie Maleinsäureanhydrid-Copolymere oder Umesterungsprodukte von Vinylacetat-Copolymere mit Trimellithsäureanhydrid.
2. Herstellung des Methylestergruppen enthaltenden Polyester durch Umsetzung des sauren Polycarbonsäurealkylesters mit überwiegend Monoepoxidverbindungen bei Temperaturen von 100 bis 240°C, bevorzugt von 120 bis 200°C bis auf eine Säurezahl unter 10, bevorzugt unter 5. Die eingesetzten Mengenverhältnisse entsprechen pro freier Carboxylgruppe etwa 0,5 bis 1 Val

Epoxidverbindung. Als Monoepoxidverbindungen werden Monoalkylglycidyläther, wie Butylglycidyläther, oder Monoalkylglycidylester wie der Glydidylester der Versaticsäure angesehen. Durch Defunktionalisieren von Polyglycidyläthern auf Basis Bisphenol A oder von epoxidierten Olefinen wie 1-Epoxiäthyl-3,4-epoxicyclohexan oder Dicyclopentenyl-diepoxid mit Monoaminen, Alkoholen oder organischen Säuren können auch entsprechende monofunktionelle Komponenten hergestellt werden. Die Polycarbonsäureanhydride können auch vollständig verestert und anschließend durch eine Umesterungs- oder Umamidierungsreaktion in das Grundharz eingebaut werden.

Die verschiedenen aminogruppenhaltigen Grundharztypen (Komponente A) können entweder allein oder als Gemisch mehrerer Harze mit dem zugehörigen Vernetzungsmittel (Komponente B) eingesetzt werden. So kann es z. B. zur Abstimmung der mechanischen und elektrischen Eigenschaften notwendig sein, daß ein aminogruppenhaltiges Epoxidharz mit einem Polyaminoamidharz zusammen verwendet wird. Die Mischung dieser gegebenenfalls in organischen Lösungsmitteln anverdünnten Konzentrate wird gegebenenfalls unter Zusatz von wenig Wasser unter Rühren und Inertgas solange auf Temperaturen von 50 bis 200°C, vorzugsweise 80 bis 150°C erwärmt, bis die Komponenten miteinander nach dem Verdünnen verträglich geworden sind. Durch diese Präkondensation erfolgt also in einem gewissen Umfang eine Verknüpfung der Komponenten A und B. Die ablaufende Reaktion kann leicht an der Viskositätsänderung der Kondensationsreaktion beobachtet werden. Es werden dabei Viskositäten von 0,5 bis 10 Pa s, vorzugsweise von 1 bis 5 Pa s nach Verdünnen auf 50 Gew.-% mit Monobutylglykoläther bei 25°C gemessen. Die Reaktionszeiten betragen zweckmäßig mindestens etwa eine Stunde und in der Regel nicht über fünf Stunden. Zweckmäßig erfolgt das Erhitzen in einer 60 bis 95 gewichtsprozentigen, bevorzugt 75 bis 90 gewichtsprozentigen Lösung in organischen Lösungsmitteln, bevorzugt linearen oder verzweigten aliphatischen Alkoholen mit 1 bis 6, zweckmäßig 2 bis 4 C-Atomen, besonders zweckmäßig sekundären Alkoholen oder deren Monoglykoläthern. Bei zu weitgehender Präkondensation tritt zuerst eine Verschlechterung des Verlaufs im Film, später ein Gelieren des Ansatzes ein. Das Mischungsverhältnis wird so gewählt, daß die Summe der Äquivalente von primären und/oder sekundären Aminogruppen der Komponente A zu den Äquivalenten der veresterten Carboxylgruppen der Komponente B im Bereich von etwa 1 : 5 bis 1 : 0,1, vorzugsweise 1 : 1 bis 1 : 0,3 liegt. Besonders bevorzugt wird ein stöchiometrisches Äquivalenzverhältnis angestrebt. Zum Abstimmen der anwendungstechnischen Eigenschaften ist es außerdem möglich, in die kathodisch abscheidbaren Bindemittel außer den beschriebenen Vernetzungsmitteln in geringem Umfang noch weitere modifizierende Harze einzuemulgieren oder mit einzukondensieren. Als solche können dienen Maleinatharze, Styrol-Allylalkohol Copolymere, OH-gruppenhaltige Acrylcopolymere, OH-gruppenhaltige Epikote®-Ester, blockierte Isocyanate, sowie Amin- und Phenol-Formaldehyd-Harze. Um Fällungserscheinungen zu vermeiden, sollten nicht über 20 Gew.-%, besser unter 10 Gew.-% einemulgiert werden, und zur Verbesserung der Emulgierbarkeit entweder eine höhere OH-Zahl von etwa 100 bis 250 oder ein geringer Anteil an basischen Aminogruppen (Aminzahl unter etwa 60, besser unter 40) vorhanden sein.

Die Wasserlöslichkeit wird durch Salzbildung der aminogruppenhaltigen Harze mit sauren Verbindungen erzielt.

Hierzu eignen sich beispielsweise Salzsäure, Essigsäure, Phosphorsäure, Milchsäure, Malonsäure, Zitronensäure, Ameisensäure, Acrylsäure usw. Mit Wasser verdünnbare, als Bindemittel dienende kationische Harze können hergestellt werden, indem man dem basischen Harz etwa 0,2 bis 1,0 Val, vorzugsweise 0,3 bis 0,8 Val der protonisierenden Säure bezogen auf das basische Stickstoffatom im Harz zusetzt und das Gemisch bei Temperaturen von etwa 20 bis 90°C gut rührt. Von der Herstellung der Harze eingeschleppte störende Lösungsmittel werden im Vakuum abdestilliert, z. B. bei der Entfernung des überschüssigen Polyamins oder nach der hydrolytischen Zersetzung des Ketimins. Das Überzugsmittel kann zur Senkung der Viskosität, zur Steuerung der Abscheidespannung und zur Verbesserung des Verlaufs bis zu ungefähr 20 Gew.-% organischer Lösungsmittel enthalten. Es können hierbei wasserlösliche Lösungsmittel wie Alkohole, Glykoläther, Ketoalkohole oder geringe Anteile nicht wasserlöslicher Lösungsmittel wie Kohlenwasserstoffe verschiedener Kettenlänge verwendet werden. Es wird ein möglichst niedriger Gehalt an organischen Lösungsmitteln angestrebt, besonders unter 15 Gew.-%, ganz besonders unter 10 Gew.-%.

Der Feststoffgehalt des Lackes, in dem das Überzugsmittel gemäß der Erfindung in verdünnter Form enthalten ist, richtet sich nach der jeweiligen Auftragsmethode. Zum Tauchen ohne Anlegen einer elektrischen Spannung oder zum Spritzen sind Feststoffgehalte von etwa 30 bis 60 Gew.-% zweckmäßig. Zur kathodischen Abscheidung aus einem Lackbad auf elektrisch leitenden Oberflächen beträgt er nach dem Verdünnen mit Wasser zweckmäßig 5 bis 30 Gew.-%, vorzugsweise 10 bis 20 Gew.-%. Der pH-Wert des Lackes liegt im allgemeinen zwischen etwa 5,0 und 7,5, vorzugsweise zwischen 6,0 und 7,0. Die elektrophoretische Abscheidung erfolgt zweckmäßig frühestens 24 Stunden nach Herstellung des Bades. Während dieser Zeit wird zweckmäßig kontinuierlich gerührt, um eine gleichmäßige Verteilung zu erreichen. Als Anode werden elektrisch leitfähige, nicht korrodierende Elektroden z. B. aus nichtrostendem Stahl oder Graphit verwendet. Der kathodisch zu beschichtende Gegenstand und die Anode werden, wie für die elektrophoretische Abscheidung bekannt, in ein

wäßriges Bad getaucht. Während der Abscheidung wird das Bad bei Temperaturen von zweckmäßig etwa 20 bis 35°C gehalten. Festkörper, Abscheidetemperatur und -zeit sowie Spannung werden so gewählt, daß die gewünschte Schichtstärke nach Abspülen und Einbrennen erhalten wird.

Die Härtung erfolgt durch 15 Minuten bis 1 Stunde langes Einbrennen bei etwa 140 bis 210°C, bevorzugt 160 bis 180°C. Durch Einarbeiten von z. B. 0,05 bis 3 Gew.-% Umesterungskatalysatoren kann die Einbrenntemperatur erniedrigt oder die Vollständigkeit der Umsetzung beschleunigt werden. Als typische Katalysatoren können eingesetzt werden Ammoniumverbindungen wie Benzyltrimethylammoniumhydroxyd, organische Zinnverbindungen wie Dibutylzinndilaurat, Titankomplexe wie Butyltitanat oder Triäthanolamintitanat, Eisen-III-Acetylacetonat, Chrom-III-acetylacetonat, Zinkacetat, Bleioctoat, Cer-III-acetat, Antimontrioxid oder Kobaltnaphthenat.

Das konzentrierte, mit Wasser zu verdünnende Überzugsmittel gemäß der Erfindung mit z. B. einem Festkörper von etwa 85 bis 50 Gew.-% kann in üblicher Weise mit Kugelmühle, Dreiwalze oder Sandmühle pigmentiert werden. Zur Pigmentierung können übliche Pigmente, Füllstoffe, Korrosionsschutz-Inhibitoren und Lackhilfsmittel wie Antischaummittel verwendet werden, solange sie mit Wasser im sauren bis neutralen pH-Wert keine störenden Reaktionen eingehen, keine wasserlöslichen Fremdionen einschleppen und beim Altern in nicht aufrührbarer Form ausfallen. Die Lacke sind besonders für die Elektrotauchlackierung von Metallen geeignet und geben nach Einbrennen von 30 Minuten 180°C glatte, glänzende, harte Filme mit guter Haftfestigkeit und Elastizität, sowie besonders guter Korrosionsbeständigkeit. Das Pigment-Bindemittelverhältnis ist abhängig von der Viskosität des Bindemittels und liegt im allgemeinen zwischen 0,1 : 1 und 1,2 : 1.

Grundharz A 1 (Komponente A)

0,8 g Triphenylphosphin, 182,8 g Versaticsäure® 10 und 3703 g Polyglycidyläther auf Basis Bisphenol A mit einem Epoxiäquivalentgewicht von 606 werden unter Stickstoff vorsichtig aufgeschmolzen und unter Rühren solange bei 120 bis 130°C gehalten, bis die Säurezahl auf fast Null gesunken ist. Das abgekühlte Harz wird pulverisiert.

Epoxiäquivalentgewicht: 800

In eine 80°C warme Lösung aus 575 g Xylol und 352 g Äthylendiamin werden 1725 g des pulverförmigen Harzes in etwa 2 bis 3 Stunden unter gutem Rühren eingestreut. Es wird eine Stunde bei 80°C nacherhitzt und anschließend unter vermindertem Druck bei Anstieg der Temperatur alles Lösungsmittel und überschüssiges Amin sorgfältig abdestilliert. Es wird mit Monobutylglykoläther und sekundärem Butanol (1 : 3) auf einen Festkörper von 76,1 Gew.-% verdünnt.

| | |
|---|---|
| Aminzahl: | 98 mg KOH/g Festharz |
| Viskosität: | 2,1 Pa s (nach Verdünnen auf 50 Gew.-% mit Monobutylglykoläther bei 25°C) |

Grundharz A 2

Käufliches Polyaminoamidharz auf Basis dimerisierter Fettsäure und Äthylendiamin mit einer Aminzahl von 90 und einer Viskosität von 0,86 Pa s, gemessen nach Verdünnen auf 50 Gew.-% mit Monobutylglykoläther bei 25°C.

Grundharz A 3

800 g Methyl-isobutylketon werden unter Inertgas auf 120°C erwärmt. Ein Gemisch aus 1444 g n-Butylacrylat, 764 g Styrol, 380 g Glycidylmethacrylat, 924 g Hydroxipropylmethacrylat, 80 g Azo-bis-isobutyronitril, 400 g Methylisobutylketon und 4 g Triphenylphosphin wird in 3 Stunden zugetropft, wobei die Temperatur auf 130°C ansteigt. Danach werden 20 g Azobisisobutyronitril in etwas Aceton aufgeschlämmt und zugegeben, und es wird weitere 2 Stunden unter Rückfluß gehalten, wobei gleichzeitig Wasserreste auskreisen sollen. Nach Abkühlen auf 80°C werden in etwa 10 Minuten 802 g einer 57%igen Lösung von Methylaminopropylaminmonoisobutylketimin in Methylisobutylketon zugegeben, und die Temperatur wird zwei weitere Stunden bei 80°C gehalten. Dann werden 32 g Diäthylamin zugegeben. Nach 30 Minuten bei 80°C wird Methylisobutylketon abdestilliert, und es wird mit 992 g Monobutylglykoläther verdünnt.

| | |
|---|---|
| Festkörper: | 73,5 Gew.-% (40 Min. bei 180°C) |
| Viskosität: | 3,85 Pa s (nach Verdünnen auf 50 Gew.-% mit Monobutylglykoläther bei 25°C) |
| Aminzahl: | 74 mg KOH/g Festkörper |

Grundharz A 4

2167 g einer 75%igen Lösung eines Epoxidharzes auf Basis Bisphenol A in technischem Xylol mit einem Epoxiäquivalent von 612 werden unter Zusatz von 3 g Triphenylphosphin auf 140 bis 150°C erwärmt, um eventuell vorhandenes Wasser auszukreisen. Nach Abkühlen auf 70 bis 80°C werden 500 g eines Adduktes von einem Mol n-Hexandiamin-1,6 mit 2 Mol Versaticsäure-glycidylester in etwa 30 Minuten zugegeben, und anschließend wird eine Stunde bei 70°C gehalten. Danach werden in 15 Minuten 280 g einer 87,7%igen Lösung von Methylaminopropylaminmonobutylaldimin in Isobutyraldehyd zugegeben. Die Reaktionstemperatur steigt bis auf etwa 95°C an und fällt dann wieder auf 80°C ab, bei der die Lösung dann noch zwei Stunden gehalten wird. Nach Zusatz von 1038 g Monobutylglykoläther werden überschüssiges Isobutyraldehyd und Xylol im Vakuum abdestilliert.

| | |
|---|---|
| Festkörper: | 74,5 Gew.-% (40 Min. bei 180°C) |
| Viskosität: | 1,5 Pa s (nach Verdünnen auf 50 Gew.-% mit Monobutylglykoläther bei 25°C) |
| Aminzahl: | 118 mg KOH/g Festkörper |

Vernetzungsmittel B 1 (Komponente B)

569,6 g eines biuretgruppenhaltigen alipatischen Triisocyanats auf Basis Hexamethylendiisocyanat werden in 96 g wasserfreiem Äthylglykolacetat gelöst und auf 80°C erwärmt. In 25 Minuten werden 236 g wasserfreier Milchsäureäthylester zugetropft, danach 30 Minuten bei 80°C gehalten und dann in 10 Minuten 59 g Methyldiäthanolamin zugegeben. Nach 2 Stunden bei 80°C wird abgefüllt.

| | |
|---|---|
| Theoretischer Festkörper: | etwa 90 Gew.-% |
| Esterzahl (berechnet): | 130 mg KOH/g Festharz |
| Aminzahl: | 32 mg KOH/g Festharz |

Vernetzungsmittel B 2 (Komponente B)

1851 g Trimellithsäureanhydrid und 1344 g Milchsäureäthylester werden unter Inertgas und gutem Rühren in etwa einer Stunde auf 200°C erwärmt und diese Temperatur gehalten, bis eine Säurezahl von 363 gemessen wird.

450 g dieses sauren Polycarbonsäureesters werden auf 140°C abgekühlt und 698 g Glycidylester der Versaticsäure in etwa 15 Minuten zugegeben. Danach wird bei 140 bis 150°C gehalten, bis die Säurezahl $< 1$ beträgt.

| | |
|---|---|
| Theoretischer Festkörper: | etwa 97 Gew.-% |
| Esterzahl (berechnet) | etwa 70 mg KOH/g Festharz |

Vernetzungsmittel B 3

1018 g Pyromellithsäuredianhydrid und 551 g wasserfreier Milchsäureäthylester werden aufgeheizt, bis ein klares Reaktionsprodukt entsteht, und bei 180°C gehalten, bis die Säurezahl 476 beträgt. Danach wird auf 80°C abgekühlt, und unter Zusatz von 4 g Dimethylbenzylamin werden 2427 g Versaticsäure®-Glycidylester in einer Stunde zugegeben, wobei die Temperatur vorübergehend bis auf 190°C anstieg. Es wird bei 140°C gehalten, bis die Säurezahl etwa 2 beträgt, und mit 470 g Äthylglykol verdünnt.

| | |
|---|---|
| Festkörper: | 80,8 Gew.-% (40 Min. bei 180°C) |
| Viskosität: | 0,7 Pa s (nach Verdünnen auf 60 Gew.-% mit Monobutylglykoläther bei 25°C) |
| Esterzahl (berechnet): | 65 mg KOH/g Festharz |

Vernetzungsmittel B 4

750 g Pyromellithsäuretetraäthylester, der noch eine Restsäurezahl von 46 hatte, werden mit 186 g Neopentylglykol bei einer langsam ansteigenden Temperatur von 220 bis 300°C verestert, wobei 148 g Destillat (Äthanol) übergingen.

| | |
|---|---|
| Säurezahl: | 36 mg KOH/g Festkörper |

| | |
|---|---|
| Viskosität: | 246 mPa s (nach Verdünnen auf 60 Gew.-% mit Monobutylglykoläther 25° C) |
| Esterzahl (Berechnet): | 415 mg KOH/g Festkörper |

## Beispiel 1

### a) Präkondensat

1478 g des Grundharzes A 1 werden mit 75 g Grundharz A 2 und 448 g Vernetzungsmittel B 1 gemischt, auf Rückflußtemperatur (etwa 116° C) unter Rühren und unter Stickstoff erhitzt und zwei Stunden bei dieser Temperatur präkondensiert.

| | |
|---|---|
| Viskosität: | 1,8 Pa s (nach Verdünnen auf 50 Gew.-% mit Monobutylglykoläther bei 25° C) |
| Festkörper: | 75,4 Gew.-% (40 Minuten langes Erhitzen auf 180° C im Umluftofen) |

### b) Abscheidungsbad

265 g Präkondensat werden mit 4,8 g Essigsäure und 1,7 g Eisen-III-acetylacetonat gemischt und mit 1728 g Wasser allmählich auf einen Festkörper von etwa 10 Gew.-% verdünnt. MEQ-Säure ist die Zahl der Milliäquivalente Amin pro 100 g Festkörper.

| | |
|---|---|
| MEQ-Säure: | etwa 40 |
| pH-Wert: | 6,7 |
| Badleitfähigkeit: | 1030 $\mu Scm^{-1}$ |

Beim Stehen des Bades treten keine Fällungserscheinungen oder Phasentrennungen auf.

Die Filme werden 2 Minuten bei einer Badtemperatur von 30° C auf Bonder 127 abgeschieden, mit Wasser abgespült und 25 Minuten bei 160° C eingebrannt.

| | |
|---|---|
| Abscheidespannung: | 150 Volt für 20 µm Trockenfilmstärke |
| Pendelhärte nach König (DIN 53 157): | 210/213 Sekunden |
| Biegeprobe: | i. O. (in Ordnung) |
| Salzsprühtest nach DIN 50 021 | |
| 144 Std. auf blankem Blech: | 1,5 bis 2,5 mm Unterwanderung |
| 360 Std. auf Bonder 127: | 2 bis 3 mm Unterwanderung |

## Vergleichsversuch 1

Mit 184 g Grundharz A 1 werden 44,5 g Vernetzungsmittel B 1, 118 g einer 16,9%igen Paste aus Grundharz A 2 (diese Paste wird aus 750 g Grundharz A 2, 375 g Monobutylglykoläther, 31 g Essigsäure und 3843 g Wasser hergestellt), 1,7 g Eisen-III-acetylacetonat und 7,2 g Essigsäure gemischt und mit 1645 g Wasser allmählich auf einen Festkörper von etwa 10 Gew.-% verdünnt.

| | |
|---|---|
| MEQ-Säure: | etwa 60 |
| pH-Wert: | 6,2 |
| Badleitfähigkeit: | 1 300 $\mu Scm^{-1}$ |

Beim Stehen des Bades setzt sich in 24 Stunden ein Bodensatz ab, gelegentlich können auch an der Oberfläche hautartige Abtrennungen entstehen.

Die Filme werden 2 Minuten bei einer Badtemperatur von 30° C auf Bonder 127 L abgeschieden, mit Wasser abgespült und 25 Minuten bei 160° C eingebrannt.

| | |
|---|---|
| Abscheidespannung: | 220 Volt für 18 bis 20 µm Trockenfilmstärke |
| Pendelhärte nach König (DIN 53 157): | 210/213 Sekunden |
| Biegeprobe: | i. O. (in Ordnung) |
| Salzsprühtest nach DIN 50 021 | |
| 144 Std. auf blankem Blech: | 2 bis 3 mm Unterwanderung |
| 360 Std. auf Bonder 127 L: | 1,5 bis 2 mm |

## Beispiel 2

### a) Präkondensat

671 g des Grundharzes A 1 (Festkörper=74,5 Gew.-%) und 71 g des Grundharzes A 2 werden mit 143 g Vernetzungsmittel B 2 gemischt, unter Rühren auf eine Temperatur von 95°C unter Stickstoff erwärmt und bei dieser Temperatur 2 Stunden präkondensiert.

| | |
|---|---|
| Viskosität: | 3,9 Pa s (nach Verdünnen auf 50 Gew.-% mit Monobutylglykoläther bei 25°C) |
| Festkörper: | 77,5 Gew.-% (40 Minuten langes Erhitzen auf 180°C im Umluftofen) |

### b) Abscheidungsbad

258 g Präkondensat werden mit 6,0 g Essigsäure und 1,7 Eisen-III-acetylacetonat gemischt und mit 1734 g entionisiertem Wasser allmählich auf einen Festkörper von etwa 10 Gew.-% verdünnt.

| | |
|---|---|
| MEQ-Säure: | etwa 50 |
| pH-Wert: | 5,9 |
| Badleitfähigkeit: | 1 025 $\mu Scm^{-1}$ |

Beim Stehen des Bades treten keine Fällungserscheinungen auf. Die Filme werden 2 Minuten bei einer Badtemperatur von 30°C auf Bonder 127 abgeschieden, mit Wasser abgespült und 25 Minuten bei 160°C eingebrannt.

| | |
|---|---|
| Abscheidespannung: | 250 Volt für 16 µm Trockenfilmstärke |
| Pendelhärte nach König (DIN 53 157): | 231/232 Sekunden |
| Biegeprobe: | i. O. (in Ordnung) |

## Beispiel 3

### a) Präkondensat

769 g Grundharz A 3 werden mit 231 g Vernetzungsmittel B 1 und 207 g Monobutylglykoläther gemischt und 3 Stunden bei 60°C unter Rühren und Inertgas erwärmt.

| | |
|---|---|
| Festkörper: | 59,9 Gew.-% (40 Min. bei 180°C) |
| Viskosität: | 4,9 Pa s (nach Verdünnen auf 50 Gew.-% mit Monobutylglykoläther bei 25°C) |

### b) Abscheidungsbad

334 g Präkondensat werden mit 1,7 g Eisen-III-acetylacetonat und 7,2 g Eisessig gemischt und mit Wasser allmählich auf einen Festkörper von etwa 10 Gew.-% verdünnt.

| | |
|---|---|
| MEQ-Säure: | ca. 60 |
| pH-Wert: | 6,6 |
| Badleitfähigkeit: | 1577 $\mu Scm^{-1}$ |

Beim Stehen des Bades traten keine Fällungserscheinungen auf. Die Filme wurden zwei Minuten bei einer Badtemperatur von 30°C auf ein phosphatiertes Blech (Bonder 127 der Firma Metallgesellschaft, Bundesrepublik Deutschland) abgeschieden, mit Wasser abgespült und 25 Minuten bei 160°C eingebrannt.

| | |
|---|---|
| Abscheidespannung: | 150 Volt für 20 µm Trockenfilmstärke |
| Pendelhärte (DIN 53 157): | 88 Sekunden |
| Erichsen-Tiefung (DIN 53 156): | 9,5 mm |

Beispiel 4

a) Präkondensat

796 g Grundharz A 3 werden mit 204 g Vernetzungsmittel B 3 und 250 g Monobutylglykoläther gemischt und 3 Stunden bei 60° C unter Rühren und Inertgas erwärmt.

| | |
|---|---|
| Festkörper: | 59,0 Gew.-% (40 Min. bei 180°) |
| Viskosität: | 6,7 Pa s (nach Verdünnen auf 50 Gew.-% mit Monobutylglykoläther bei 25° C) |

b) Abscheidungsbad

338,5 g Präkondensat werden mit 6 g Blei-octoat und 7,2 g Essigsäure gemischt und mit Wasser allmählich auf einen Festkörper von etwa 10 Gew.-% verdünnt.

| | |
|---|---|
| MEQ-Säure: | etwa 60 |
| pH-Wert: | 5,95 |
| Badleitfähigkeit: | 1496 $\mu Scm^{-1}$ |

Beim Stehen des Bades treten keine Fällungserscheinungen auf. Die Filme werden zwei Minuten bei einer Badtemperatur von 30° C auf phosphatierte Bleche (Bonder 127 der Firma Metallgesellschaft) abgeschieden, mit Wasser abgespült und 25 Minuten bei 160° C eingebrannt.

| | |
|---|---|
| Abscheidespannung: | 110 Volt für 20 µm Trockenfilmstärke |
| Pendelhärte (DIN 53 157): | 154 Sekunden |
| Erichsen-Tiefung (DIN 53 156): | 10,7 mm |

Beispiel 5

a) Präkondensat

600 g Grundharz A 4 wurden mit 162,6 g Vernetzungsmittel B 1, das zusätzlich nach Abdestillieren von Äthylacetat auf einen Festkörper von 69 Gew.-% mit Butylglykol verdünnt wurde, und 33,7 g Butylglykol gemischt. Dann wurde schnell auf 80° C und danach in 4 Stunden von 80 auf 120° C erhitzt und 30 Minuten später abgekühlt.

| | |
|---|---|
| Festkörper: | 68,8 Gew.-% (40 Min. bei 180° C) |
| Viskosität: | 2,4 Pa s (nach Verdünnen auf 50 Gew.-% mit Monobutylglykoläther bei 25° C) |

b) Abscheidungsbad

349 g Präkondensat wurden mit 2 g Eisen-III-acetylacetonat, 6,7 g Bleioctoat und 7,2 g Eisessig gemischt und mit Wasser allmählich auf einen Festkörper von etwa 12 Gew.-% verdünnt.

| | |
|---|---|
| MEQ-Säure: | etwa 50 |
| pH-Wert: | 6,4 |
| Badleitfähigkeit: | 1610 $\mu Scm^{-1}$ |

Beim Stehen des Bades traten keine Fällungserscheinungen auf. Die Filme wurden zwei Minuten bei einer Badtemperatur von 30°C auf phosphatierten Blechen (Bonder 127 der Metallgesellschaft) abgeschieden, mit Wasser abgespült und 25 Minuten bei 180° C eingebrannt.

| | |
|---|---|
| Abscheidespannung: | 170 Volt für 18—10 µm Trockenfilmstärke |
| Pendelhärte (DIN 53 157): | 213 Sekunden |
| Erichsen-Tiefung (DIN 53 156): | 9,0 mm |

Beispiel 6

a) Präkondensat

600 g Grundharz A 4 wurden mit 112 g Vernetzungsmittel B 4 und 67 g Butylglykol gemischt und nach langsamem Aufheizen auf 150° C zwei Stunden bei dieser Temperatur gehalten.

| | |
|---|---|
| Festkörper: | 75,4 Gew.-% (40 Min. bei 180° C) |
| Viskosität: | 3,1 Pa s (nach Verdünnen auf 50 Gew.-% mit Monobutylglykoläther bei 25° C) |

b) Abscheidungsbad

318 g Präkondensat wurden mit 2 g Eisen-III-acetylacetonat, 6,7 g Bleioctoat und 7,2 g Eisessig gemischt und mit Wasser allmählich auf einen Festkörper von etwa 12 Gew.-% verdünnt.

| | |
|---|---|
| MEQ-Säure: | etwa 50 |
| pH-Wert: | 5,3 |
| Badleitfähigkeit: | 1240 $\mu$uScm$^{-1}$ |

Beim Stehen des Bades traten keine Fällungserscheinungen auf. Die Filme wurden 2 Minuten bei einer Badtemperatur von 30°C auf phosphatierten Blechen (Bonder 127 der Metallgesellschaft) abgeschieden, mit Wasser abgespült und 25 Minuten bei 180° C eingebrannt.

| | |
|---|---|
| Abscheidespannung: | 240 Volt für eine Trockenfilmstärke von 20 $\mu$m |
| Pendelhärte (DIN 53 157): | 200 Sek. |
| Erichsen-Tiefung (DIN 53 156): | 9,3 mm |

**Patentansprüche**

1. Präkondensiertes, hitzehärtbares wäßriges Lacküberzugsmittel enthaltend durch Protonisieren mit Säuren wasserverdünnbares Bindemittel, Pigmente, Füllstoffe, Korrosionsschutzinhibitoren, Lackhilfsmittel, gegebenenfalls Katalysatoren und in einer Menge von bis zu 20 Gew.-%, bezogen auf das Gesamtgewicht des Überzugsmittels, organische Lösungsmittel, dadurch gekennzeichnet, daß es als Bindemittel enthält ein Präkondensationsprodukt mit einem mittleren Molekulargewicht ($\overline{Mn}$) von 800 bis 15 000, durch Erhitzen von

A) 55 bis 95 Gew.-%, bezogen auf die Gesamtmenge des Bindemittels, primäre und/oder sekundäre und gegebenenfalls auch tertiäre Aminogruppen enthaltendes organisches Kunstharz-Bindemittel, das eine Aminzahl von 30 bis 150 aufweist, und

B) 5 bis 45 Gew.-% Vernetzungsmittel, das endständige Carboxylgruppen enthält, von denen ein solcher Anteil mit Monoalkoholen verestert ist, daß das Präkondensat eine Esterzahl von mindestens 30, bevorzugt von mindestens 50 aufweist, wobei die Estergruppen in neutralem wäßrigem Medium weitgehend stabil sind, jedoch in basischem Medium bei Temperaturen über 140° C gegenüber primären und/oder sekundären Aminogruppen des Kunstharz-Bindemittels A reaktionsfähig sind,

auf Temperaturen von 50 bis 200° C für einen solchen Zeitraum, daß es nach Protonisieren mit Säure und Verdünnen mit Wasser zur Herstellung eines Lackes keine Fällungserscheinungen zeigt.

2. Überzugsmittel nach Anspruch 1, dadurch gekennzeichnet, daß das Präkondensationsprodukt durch Erhitzen auf 80 bis 150° C erhalten wurde.

3. Überzugsmittel nach Anspruch 1 oder 2, dadurch gekennzeichnet, daß das Präkondensationsprodukt durch Erhitzen während 1 bis 5 Stunden erhalten wurde.

4. Überzugsmittel nach einem oder mehreren der Ansprüche 1 bis 3, dadurch gekennzeichnet, daß das Präkondensationsprodukt durch Erhitzen der Komponenten A und B in einer 60 bis 95 Gew.-%igen Lösung in organischen Lösungsmitteln erhalten wurde.

5. Überzugsmittel nach Anspruch 4, dadurch gekennzeichnet, daß das Präkondensationsprodukt durch Erhitzen der Komponenten A und B in einer 75 bis 90 Gew.-%igen Lösung erhalten wurde.

6. Überzugsmittel nach einem oder mehreren der Ansprüche 1 bis 5, dadurch gekennzeichnet, daß das Präkondensationsprodukt erhalten wurde durch Erhitzen, bis eine 50 Gew.-%ige Lösung des Präkondensationsproduktes in Monobutylglykoläther, gemessen bei 25° C, eine Viskosität von 0,5 bis 10 Pa s aufweist.

7. Überzugsmittel nach Anspruch 6, dadurch gekennzeichnet, daß das Präkondensationsprodukt

durch Erhitzen erhalten wurde, bis die Viskosität 1 bis 5 Pa s aufweist.

8. Überzugsmittel nach einem oder mehreren der Ansprüche 1 bis 7, dadurch gekennzeichnet, daß das Präkondensationsprodukt durch Erhitzen in aliphatischen Alkoholen mit 1 bis 6, vorzugsweise 2 bis 4 C-Atomen oder deren Monoglykoläthern als Lösungsmittel erhalten wurde.

9. Überzugsmittel nach einem oder mehreren der Ansprüche 1 bis 8, dadurch gekennzeichnet, daß das Kunstharzbindemittel (Komponente A) ein Polyamid oder ein Reaktionsprodukt von epoxidgruppenhaltigen oder isocyanatgruppenhaltigen Verbindungen mit einem Molekulargewicht über 300 mit hydroxy- oder aminogruppenhaltigen Aldiminen, Ketiminen oder aliphatischen Diaminen ist, wobei im wesentlichen alle Epoxi- und Isocyanatgruppen mit je einem Molekül Aldimin, Ketimin oder Diamin umgesetzt sind.

10. Überzugsmittel nach einem oder mehreren der Ansprüche 1 bis 9, dadurch gekennzeichnet, daß das Vernetzungsmittel (Komponente B) ein Polyester und/oder ein Reaktionsprodukt von epoxidgruppenhaltigen oder isocyanatgruppenhaltigen Verbindungen mit einem Molekulargewicht über 300 mit Hydroxy- und/oder Aminoalkylestern oder sauren Polycarbonsäureestern ist.

11. Überzugsmittel nach einem oder mehreren der Ansprüche 1 bis 10, dadurch gekennzeichnet, daß das Vernetzungsmittel ein Molekulargewicht von mindestens 500 aufweist.

12. Überzugsmittel nach einem oder mehreren der Ansprüche 1 bis 11, dadurch gekennzeichnet, daß das Vernetzungsmittel 2 bis 6 endständig zumindest teilweise veresterte Carboxylgruppen enthält.

13. Überzugsmittel nach einem oder mehreren der Ansprüche 1 bis 12, dadurch gekennzeichnet, daß mindestens 80, vorzugsweise mindestens 90, insbesondere mindestens 95 Äquivalent-% der endständigen Carboxylgruppen der Komponente B verestert sind.

14. Überzugsmittel nach Anspruch 13, dadurch gekennzeichnet, daß im wesentlichen alle endständigen Carboxylgruppen verestert sind.

15. Überzugsmittel nach einem oder mehreren der Ansprüche 1 bis 14, dadurch gekennzeichnet, daß die endständigen Carboxylgruppen der Komponente B überwiegend mit Alkoholen mit einem Siedepunkt unter 140° C verestert sind.

16. Überzugsmittel nach einem oder mehreren der Ansprüche 1 bis 15, dadurch gekennzeichnet, daß die endständigen Carboxylgruppen der Komponente B überwiegend mit primären Alkoholen verestert sind.

17. Überzugsmittel nach einem oder mehreren der Ansprüche 1 bis 16, dadurch gekennzeichnet, daß die endständigen Carboxylgruppen der Komponente B überwiegend mit niederen aliphatischen Alkoholen, vorzugsweise Methanol und/oder Äthanol verestert sind.

18. Überzugsmittel nach einem oder mehreren der Ansprüche 1 bis 17, dadurch gekennzeichnet, daß die Komponente B eine Aminzahl von 0 bis 60, vorzugsweise von 10 bis 50, aufweist.

19. Verwendung des Überzugmittels nach Anspruch 1 zur kathodischen Abscheidung aus einem Lackbad auf elektrisch leitenden Oberflächen.

**Claims**

1. A precondensed, heat-hardenable aqueous lacquer coating agent containing a binder which is waterdilutable by protonisation with acids, also containing pigments, fillers, anticorrosion inhibitors, lacquer auxiliaries, optionally catalysts and in a quantity of up to 20% by weight, based on the total weight of the coating agent, organic solvents, characterised in that it contains as binder a precondensation product having an average molecular weight ($\overline{Mn}$) of from 800 to 15 000, obtained by heating

A) from 55 to 95% by weight, based on the total quantity of the binder, of organic synthetic resin binder which contains primary and/or secondary and optionally also tertiary amino groups and has an amine number of from 30 to 150, and
B) from 5 to 45% by weight of cross-linking agent which contains terminal carboxyl groups, a proportion of which is esterified with monoalcohols such that the precondensate has an ester number of at least 30, preferably at least 50, the ester groups being substantially stable in a neutral aqueous medium, but being reactive to primary and/or secondary amino groups of the synthetic resin binder A in a basic medium at a temperature above 140° C,

to a temperature of from 50 to 200° C for a period of time such that after protonisation with acid and after diluting with water for the production of a lacquer, it does not exhibit any precipitation phenomena.

2. A coating agent according to claim 1, characterised in that the precondensation product is obtained by heating to from 80 to 150° C.

3. A coating agent according to claim 1 or 2, characterised in that the precondensation product is obtained by heating for 1 to 5 hours.

4. A coating agent according to one or more of claims 1 to 3, characterised in that the precondensation product is obtained by heating components A and B in a 60 to 95% by weight solution

in organic solvents.

5. A coating agent according to claim 4, characterised in that the precondensation product is obtained by heating components A and B in a 75 to 90% by weight solution.

6. A coating agent according to one or more of claims 1 to 5, characterised in that the precondensation product is obtained by heating until a 50% by weight solution of the precondensation product in monobutyl glycol ether has a viscosity of from 0,5 to 10 Pa s, measured at 25° C.

7. A coating agent according to claim 6, characterised in that the precondensation product is obtained by heating until the viscosity reaches from 1 to 5 Pa s.

8. A coating agent according to one or more of claims 1 to 7, characterised in that the precondensation produkt is obtained by heating in aliphatic alcohols havong from 1 to 6, preferably from 2 to 4 carbon atoms, or in monoglycol ethers thereof as solvent.

9. A coating agent according to one or more of claims 1 to 8, characterised in that the synthetic resin binder (component A) is a polyamide or a reaction product of compounds which contain epoxide groups or isocyanate groups and have a molecular weight of more than 300, with aldimines, ketimines or aliphatic diamines containing hydroxy or amino groups, substantially all the epoxy and isocyanate groups each being reacted with one molecule of aldimine, ketimine or diamine.

10. A coating agent according to one or more of claims 1 to 9, characterised in that the cross-linking agent (component B) is a polyester and/or a reaction product of compounds which contain epoxide groups or isocyanate groups and have a molecular weight of more than 300, with hydroxy and/or amino alkyl esters or acid polycarboxylic acid esters.

11. A coating agent according to one or more of claims 1 to 10, characterised in that the cross-linking agent has a molecular weight of at least 500.

12. A coating agent according to one or more of claims 1 to 11, characterised in that in that the cross-linking agent contains from 2 to 6 terminal, at least partly esterified carboxyl groups.

13. A coating agent according to one or more of claims 1 to 12, characterised in that at least 80, preferably at least 90, and in particular at least 95 equivalent % of the terminal carboxyl groups of component B are esterified.

14. A coating agent according to claim 13, characterised in that substantially all the terminal carboxyl groups are esterified.

15. A coating agent according to one or more of claims 1 to 14, characterised in that the terminal carboxyl groups of component B are mainly esterified with alcohols having a boiling point of below 140° C.

16. A coating agent according to one or more of claims 1 to 15, characterised in that the terminal carboxyl groups of component B are mainly esterified with primary alcohols.

17. A coating agent according to one or more of claims 1 to 16, characterised in that the terminal carboxyl groups of component B are mainly esterified with lower aliphatic alcohols, preferably methanol and/or ethanol.

18. A coating agent according to one or more of claims 1 to 17, characterised in that component B has an amine number of from 0 to 60, preferably from 10 to 50.

19. The use of the coating agent according to claim 1 for cathodic deposition from a lacquer bath on electrically conducting surfaces.

**Revendications**

1. Produit de revêtement du type vernis aqueux précondensé, thermodurcissable, contenant un liant diluable à l'eau par protonisation à l'aide d'acides, des pigments, des matières de charge, des agents anticorrosion, des produits auxiliaires pour peintures et vernis, le cas échéant des catalyseurs et, en quantité allant jusqu'à 20% en poids par rapport au poids total du produit de revêtement, des solvants organiques, caractérisé en ce qu'il contient en tant que liant un produit de précondensation à un poids moléculaire moyen ($\overline{Mn}$) de 800 à 15 000, obtenu par chauffage de:

A) 55 à 95% en poids, par rapport à la quantité totale du liant, d'un liant résineux synthétique organique contenant des groupes amino primaires et/ou secondaires et le cas échéant également tertiaires, présentant un indice d'amine de 30 à 150, et

B) 5 à 45% en poids d'un agent réticulant contenant des groupes carboxyle dans les positions terminales, lesquels sont estérifiés par des monoalcools en proportion telle que le précondensat présente un indice d'ester d'au moins 30, de préférence d'au moins 50, les groupes ester étant pratiquement stables en milieu aqueux neutre mais réactifs en milieu basique à des températures supérieures à 140° C à l'égard des groupes amino primaires et/ou secondaires du liant résineux synthétique A,

à des températures de 50 à 200° C pendant une durée telle qu'après protonisation par un acide et dilution par l'eau pour préparation d'un vernis, il ne se produise pas de phénomène de précipitation.

2. Produit de revêtement selon la revendication 1, caractérisé en ce que le produit de

précondensation a été obtenu par chauffage à une température de 80 à 150° C.

3. Produit de revêtement selon la revendication 1 ou 2, caractérisé en ce que le produit de précondensation a été obtenu par chauffage pendant 1 à 5 heures.

4. Produit de revêtement selon une ou plusieurs des revendications 1 à 3, caractérisé en ce que le produit de précondensation a été obtenu par chauffage des composants A et B en solution à une concentration de 60 à 95% en poids dans des solvants organiques.

5. Produit de revêtement selon la revendication 4, caractérisé en ce que le produit de précondensation a été obtenu par chauffage des composants A et B en solution à une concentration de 75 à 90% en poids.

6. Produit de revêtement selon une ou plusieurs des revendications 1 à 5, caractérisé en ce que le produit de précondensation a été obtenu par chauffage jusqu'à ce qu'une solution à 50% en poids du produit de précondensation dans l'éther monobutylique du glycol présente, mesurée à 25° C, une viscosité de 0,5 à 10 Pa s.

7. Produit de revêtement selon la revendication 6, caractérisé en ce que le produit de précondensation a été obtenu par chauffage jusqu'à une viscosité de 1 à 5 Pa s.

8. Produit de revêtement selon une ou plusieurs des revendications 1 à 7, caractérisé en ce que le produit de précondensation a été obtenu par chauffage dans des alcools aliphatiques en C 1—C 6, de préférence en C 2—C 4, ou leurs monoéthers de glycol, en tant que solvants.

9. Produit de revêtement selon une ou plusieurs des revendications 1 à 8, caractérisé en ce que le liant résineux synthétique (composant A) est un polyamide ou un produit de réaction de composés contenant des groupes époxy ou contenant des groupes isocyanate et possédant un poids moléculaire supérieur à 300 avec des aldimines ou cétimines contenant des groupes hydroxy ou amino ou des diamines aliphatiques, tous les groupes époxy et isocyanate ayant essentiellement réagi chacun avec 1 molécule d'aldimine, de cétimine ou de diamine.

10. Produit de revêtement selon une ou plusieurs des revendications 1 à 9, caractérisé en ce que l'agent réticulant (composant B) est un polyester et/ou un produit de réaction de composés contenant des groupes époxy ou des groupes isocyanate et présentant un poids moléculaire supérieur à 300 avec des esters hydroxy- et/ou aminoalkyliques ou des esters acides d'acides polycarboxyliques.

11. Produit de revêtement selon une ou plusieurs des revendications 1à 10, caractérisé en ce que l'agent réticulant a un poids moléculaire d'au moins 500.

12. Produit de revêtement selon une ou plusieurs des revendications 1 à 11, caractérisé en ce que l'agent réticulant contient 2 à 6 groupes carboxyle terminaux estérifiés en partie au moins.

13. Produit de revêtement selon une ou plusieurs des revendications 1 à 12, caractérisé en ce qu'au moins 80, de préférence au moins 90 et plus particulièrement au moins 95 équivalents % des groupes carboxyle terminaux du composant B sont estérifiés.

14. Produit de revêtement selon la revendication 13, caractérisé en ce qu'essentiellement tous les groupes carboxyle terminaux sont estérifiés.

15. Produit de revêtement selon une ou plusieurs des revendications 1 à 14, caractérisé en ce que les groupes carboxyle terminaux du composant B sont principalement estérifiés par des alcools à point d'ébullition inférieur à 140° C.

16. Produit de revêtement selon une ou plusieurs des revendications 1 à 15, caractérisé en ce que les groupes carboxyle terminaux du composant B sont estérifiés principalement par des alcools primaires.

17. Produit de revêtement selon une ou plusieurs des revendications 1 à 16, caractérisé en ce que les groupes carboxyle terminaux du composant B sont estérifiés principalement par des alcools aliphatiques inférieurs, de préférence le méthanol et/ou l'éthanol.

18. Produit de revêtement selon une ou plusieurs des revendications 1 à 17, caractérisé en ce que le composant B présente un indice d'amine de 0 à 60, de préférence de 10 à 50.

19. Utilisation du produit de revêtement selon la revendication 1 pour la déposition cathodique à partir d'un bain de vernis sur des surfaces conductrices de l'électricité.